# FASCICULE DE BREVET EUROPEEN

(11) **EP 3 058 218 B1**
(45) Date de publication et mention de la délivrance du brevet: **31.07.2019**
(21) Numéro de dépôt: 14800111.8
(22) Date de dépôt: 16.10.2014
(51) Int. Cl.: F03D 1/02, F03D 1/06, F03D 7/02, F03D 13/10

(54) **EOLIENNE A AXE DE ROTATION HORIZONTAL COMPRENANT DES FAMILLES DE PALES**
WINDTURBINE MIT HORIZONTALER ACHSE UND GESTAPELTEN BLÄTTERN
HORIZONTAL AXIS WIND TURBINE EQUIPPED WITH STACKED BLADES

(30) Priorité: 18.10.2013 FR 1360206
(43) Date de publication de la demande: 24.08.2016
(73) Titulaire: Manceau, Sébastien, 97410 Saint Pierre (FR)
(72) Inventeur: Manceau, Sébastien, 97410 Saint Pierre (FR)
(74) Mandataire: Novagraaf Technologies
(86) Numéro de dépôt international: PCT/FR2014/052638
(87) Numéro de publication internationale: WO 2015/055958

(56) Documents cités:
- WO-A1-2007/057021
- WO-A2-2009/097850
- WO-A2-2010/053450
- DE-A1- 3 130 257
- DE-A1-102009 038 076
- US-A- 3 032 119

## Description

### 1. Domaine de l'invention

La présente invention concerne le domaine de la production d'énergie électrique. Elle vise en particulier une éolienne à axe de rotation horizontal, sensiblement parallèle à la direction du vent, servant à transformer l'énergie cinétique du vent en énergie mécanique qui sera elle-même convertie en énergie électrique.

### 2. Art antérieur

Aujourd'hui, pour obtenir une plus grande performance technique et énergétique, les professionnels proposent des éoliennes équipées de pales présentant des longueurs de plus en plus importantes. L'envergure de ces éoliennes s'intègre peu dans le paysage au vue de l'esthétique peu satisfaisante et de leur encombrement important. Ces éoliennes demandent également une logistique et une infrastructure hors norme pour l'acheminement des pièces et de leurs assemblages surtout dans le cas des éoliennes offshores.

Les plus grandes (envergure comprise entre 70 mètres et 130 mètres (m)) peuvent atteindre des puissances nominales comprises entre 2 et 7 Mégawatts à une vitesse de vent comprise entre une plage de 9 et 15 mètres par seconde (vent moyen). En dessous de cette plage et au-delà de celle-ci, les éoliennes ne produisent pas davantage d'énergie. Pourtant, afin d'augmenter leur efficacité des éoliennes destinées à produire une puissance de 10 Mégawatts (MW) sont en cours d'étude avec des envergures prévues de 140 mètres, soit l'équivalent de 2 avions A380® côte à côte.

Par vents forts, soit au-delà de 15 m/s, l'enjeu est la résistance de l'éolienne (fiabilité, solidité, contraintes) plus que le rendement énergétique de celle-ci. Bien que le couple-moteur puisse être amélioré, on se heurte aux règles de physique concernant le coefficient de puissance (Cp) (ratio entre l'énergie fournie par l'éolienne par rapport à l'énergie du vent entrant dans la surface balayée par les pales) qui est limitant. Le plafond de production (puissance nominale maximale) est généralement atteint entre 12 et 15 m/s (45 à 55 km/h), la capacité de vent captée en bout de pale et sur toute la surface balayée est alors maximisée. A cela s'ajoute le fait qu'au delà de leurs plages nominales de fonctionnement, leur coefficient de puissance (Cp) commence à chuter drastiquement ; Les éoliennes sont ralenties pour conserver la puissance nominale maximale déjà atteinte.

A partir de 25 m/s (tempêtes, ouragans), les contraintes mécaniques exercées par le vent sur les éoliennes et notamment les pales deviennent très élevées et la plupart de celles-ci sont mises à l'arrêt automatiquement pour les protéger. Au-delà de 25 m/s on risque de compromettre la tenue des éoliennes, il y a un fort risque de casse. Sur le marché terrestre, le bruit, les épisodes orageux sont des éléments justifiant une déconnexion du réseau, bien avant l'arrivée des vents trop forts.

Une proposition connue impliquant plusieurs groupes de pales sur le moyeu d'une éolienne est décrite dans le document DE 10 2009 038 076 A1 et une autre est décrite dans US 3,032,119.

### 3. Objectifs de l'invention

L'invention a notamment pour objectif de pallier tout ou partie des inconvénients de l'art antérieur.

Un objectif de l'invention est de fournir une éolienne capable de fonctionner avec tout type de vent, plus précisément en apportant une meilleure efficacité entre autre dans des conditions de vent faible et de vent fort.

En particulier, un objectif de l'invention est de fournir une éolienne produisant davantage de puissance mécanique comparé à une éolienne classique avec une envergure équivalente ou une éolienne produisant une puissance mécanique équivalente avec une envergure réduite par rapport à une éolienne classique.

Encore un autre objectif de l'invention est de réduire l'effet de cisaillement et des turbulences de sillage à l'arrière de l'éolienne obligeant à écarter les éoliennes environnantes d'un parc. En d'autres termes, permettre de densifier les parcs éoliens.

### 4. Résumé de l'invention

Ces objectifs sont atteints grâce à une éolienne comprenant :
- un rotor tournant autour d'un axe horizontal de rotation sensiblement parallèle à la direction du vent, le rotor présentant une face avant dirigée vers le vent et ladite face étant sensiblement perpendiculaire à la direction du vent, et une face arrière située vers un support du rotor; et
- au moins deux familles distinctes de pales réparties, sur le rotor, chaque famille de pales comportant au moins trois pales présentant une extrémité libre et une extrémité de pied de pale liée audit rotor, chaque famille de pales comprenant une pale de réception guidant le vent vers une pale guidage laquelle guide le vent vers une pale de force présentant une surface disposée de manière sensiblement perpendiculaire à la direction du vent, les extrémités de pied de pales des pales de chaque famille de pales étant décalées successivement sur une surface extérieure du rotor selon son axe de rotation et la pale de réception présente une longueur réduite par rapport à la pale de guidage qui elle-même présente une longueur réduite par rapport à la pale de force.

Ainsi, une telle configuration de familles de pales permet de fournir une éolienne avec une surface de pales sensiblement identique à celle d'une éolienne classique comportant de très longues pales en augmentant le nombre de pales dans une famille. La même surface mécanique face au vent est représentée par les dimensions physiques des pales dans une famille. La surface des pales est balayée par le vent pendant une durée supérieure à des pales classiques. Le vent ainsi guidé exerce une force de poussée maximale sans interruption quelque soit la vitesse vent. Les pales ont la capacité d'accélérer avec un vent faible et notamment avec un vent fort. L'agencement de ces pales permet donc d'augmenter le rendement qui devra compenser une parti de la perte du moment (longueur des pales^{∗}Force du vent) en bout de pâle (le bras de levier en bout de pale est moindre lorsque les longueurs des pales sont réduites par rapport à une éolienne classique). Un tel agencement permet également de réduire l'envergure des pales ce qui autorise une densification du parc éolien. En divisant par exemple l'envergure par deux fois pour avoir une efficacité équivalente à une éolienne classique, cela permettrait de doubler le nombre d'éolienne sur la même surface qui en générale est limitée et donc d'augmenter par deux l'efficacité d'un parc éolien par rapport à une surface exploitable.

Selon une caractéristique particulière de l'invention, la pale de réception peut être disposée devant la pale de force selon l'axe de rotation du rotor de sorte à créer une prise au vent différente. Les pales agencées ainsi se comportent alors un peu comme une succession de voiles d'un bateau. Avantageusement, la pale de réception peut être de plus petite de taille mais peut présenter une largeur supérieure à celle de la pale de force. La pale de réception rencontre le vent dans le sens de l'écoulement du vent et va chercher à guider les premiers vents vers la pale suivante qui est plus longue et qui bénéficiera donc davantage de bras de levier; L'agencement de ces familles permet donc la création de micro-zones dépressionnaires favorisant les accélérations des pales suivantes, de ramener la trainée à la seule conséquence de la longueur de la pale suivante et d'apporter une cohérence entre la vitesse du vent et l'accélération de l'ensemble rotor et familles de pales (dans les conditions de vents forts, l'ensemble rotor et familles de pales a encore la capacité d'accélérer par rapport à une éolienne classique). Il y a donc moins de frein au vent et cela participe à la diminution des effets de sillage à l'arrière de l'éolienne.

Selon un mode de réalisation, chaque extrémité de pied de pale peut être agencée sur la surface du rotor suivant un angle α prédéterminé formé entre l'axe de rotation du rotor et la direction de l'extrémité de pied de pale pour mieux guider le vent sur les pales suivantes de chaque famille.

En particulier, les pales sont dressées sur le rotor suivant une direction longitudinale qui forme un angle β prédéterminé avec la surface du rotor. De la sorte, la position des pales sur le rotor, combinée à leur orientation (pales penchées) permettent de concentrer le vent vers l'intérieur des pales. De plus, une telle configuration permet de réduire les effets de turbulences qui n'agissent plus sur une pale à la fois comme dans une éolienne classique mais sur toute la famille de pales.

De manière avantageuse, l'angle prédéterminé α ou β est supérieur à 0° et inférieur ou égale à 90°.

Suivant un autre mode de réalisation, l'éolienne comprend des moyens de déplacement déplaçant les familles de pales entre : une position initiale dans laquelle les familles de pales sont proches de l'axe horizontal du rotor; et une position développée dans laquelle les familles de pales sont situées à distance de l'axe horizontal du rotor. De la sorte, l'éolienne est capable de fonctionner dans des cas de vents faibles et forts et d'être mise en sécurité en même temps notamment en cas de vent fort.

Toujours dans le même but, les moyens de déplacement font varier l'agencement des familles de pales selon un mouvement :
- radial par rapport à l'axe de rotation du rotor ; et/ou
- de translation sensiblement parallèle à la surface du rotor suivant une direction orientée depuis la face arrière vers la face avant ou inversement.

Les moyens de déplacements peuvent être installés dans ou à l'extérieur du rotor.

Selon ce mode de réalisation, chaque famille de pales est montée sur un seul support lié aux moyens de déplacement ce qui permet de déplacer facilement toute la famille de pales en même temps.

Selon une variante de ce mode de réalisation et un autre de mode de réalisation, chaque famille 8 de pales est montée sur un support comprenant une embase coulissant sur des rails de guidages, ces rails de guidage étant agencés sur un profilé d'une structure disposée dans le rotor, le profilé étant connecté aux moyens de déplacements.

Selon un encore un autre mode de réalisation, la structure comporte au moins le profilé pourvue d'une première extrémité et d'une deuxième extrémité libre, le profilé étant agencé entre une première plateforme présentant une surface interne et une seconde plateforme à laquelle est articulée la première extrémité de sorte que le profilé est mobile entre une première position de fonctionnement dans laquelle la deuxième extrémité libre est affleurant avec la surface et une position de mise en berne dans laquelle la deuxième extrémité libre est située à distance de la surface via les moyens de déplacements.

De manière avantageuse, le support comporte des moyens de mise en rotation du support par rapport à la surface du rotor autour d'un axe de rotation traversant un pied du support et suivant un angle compris entre 0° et 360°.

Selon un autre mode de réalisation de l'invention, l'éolienne peut comprendre des moyens de guidage déplaçant chaque pale d'une famille sensiblement suivant une rotation autour de l'axe de rotation du rotor entre une position initiale dans laquelle les pales sont proches de l'axe de rotation, et une position escamotée dans laquelle les pales sont proches de l'axe de rotation et placées les une derrière les autres. Cette configuration permet d'augmenter l'échappement de l'air entre les familles de pales et de réduire la prise au vent sur les pales en cas de vent fort par exemple par rapport à la surface balayée de la pale de force (en rotation).

Selon une autre caractéristique particulière de ces modes de réalisation susmentionnés, le rotor peut comprendre une paroi comportant des ouvertures traversantes s'étendant longitudinalement depuis la face avant vers la face arrière du rotor ou s'étendant suivant une courbe comprenant une première portion s'étendant sensiblement longitudinalement depuis la face avant vers la face arrière et une deuxième portion s'étendant suivant une direction sensiblement parallèle à la direction de l'extrémité de pied de pale de la pale de force.

De manière avantageuse, chaque ouverture traversante est adaptée à recevoir au moins un élément lié aux moyens de déplacement ou des moyens de guidage traversant l'ouverture traversante entre la position initiale et la position déployée ou escamotée.

Avantageusement, les moyens de déplacement ou les moyens de guidage peuvent comprendre au moins un vérin hydraulique ou une vis sans fin pouvant être entraînée par un moteur électrique.

Selon un autre mode de réalisation, le rotor peut présenter une section cylindrique ou tronconique. Un rotor cylindrique permet de répartir convenablement les pales sur celle-ci. Dans le cas du rotor de section tronconique, cette configuration a pour but d'obliger le vent à parcourir une distance supérieure à celle d'un rotor classique. De plus, la force de poussée du vent est mieux répartie depuis l'extrémité de pied de pale jusqu'à l'extrémité libre des pales ce qui améliore l'efficacité et une meilleure stabilité de l'éolienne.

### 5. Liste des figures

D'autres caractéristiques et avantages innovants ressortiront de la description ci-après, fournie à titre indicatif et nullement limitatif, en référence aux dessins annexés, dans lesquels :
- la figure 1 est une vue de face d'une éolienne selon l'invention ;
- la figure 2 est une vue en perspective du rotor de l'éolienne et sur lequel sont montées les pales selon l'invention ;
- les figures 3, 4 et 5 représentent schématiquement un mode de réalisation d'une éolienne comprenant des pales dites statiques, les pales étant disposées sur le rotor selon une orientation particulière, la figure 3 étant une vue de dessus des pales sur le rotor, la figure 4 étant une vue de face des pales sur le rotor et la figure 5 étant une vue de côté du rotor ;
- les figures 6a, 6b et 6d illustrent de manière schématique un autre mode de réalisation de l'éolienne comprenant des pales dites dynamiques, l'éolienne se trouvant dans une situation de vent faible ;
- les figures 7a et 7b illustrent selon le mode de réalisation précédent, l'éolienne en situation de vent moyen ;
- les figures 8a et 8b illustrent selon le mode de réalisation précédent, l'éolienne en situation de vent fort ;

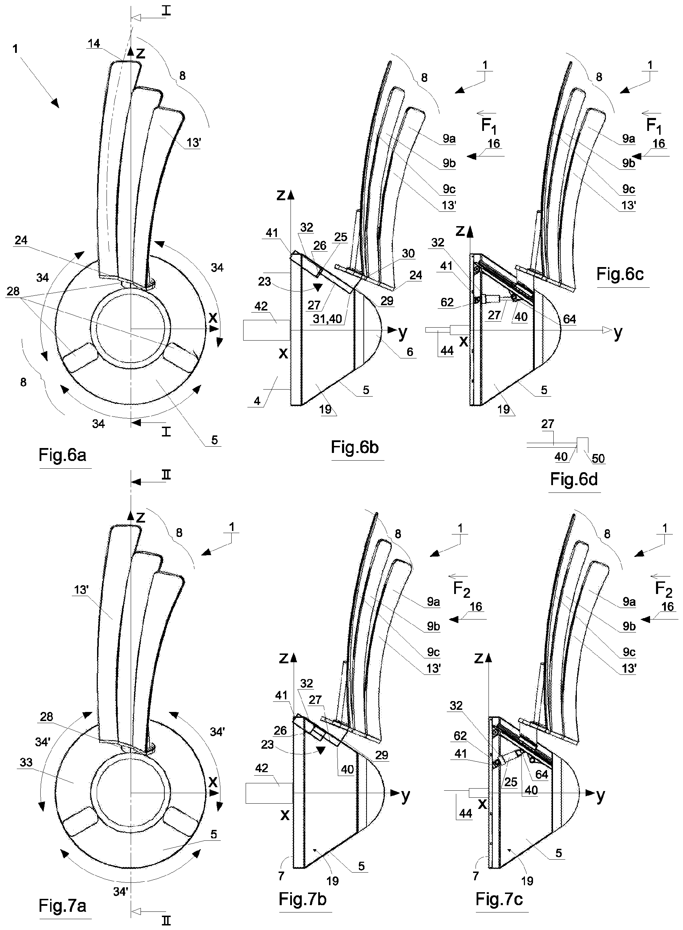

- Les figures 6c, 7c, 8c représentent une variante du mode de réalisation illustré sur les figures 6a, 6b, 6d, 7a, 7b, 8a et 8b ;

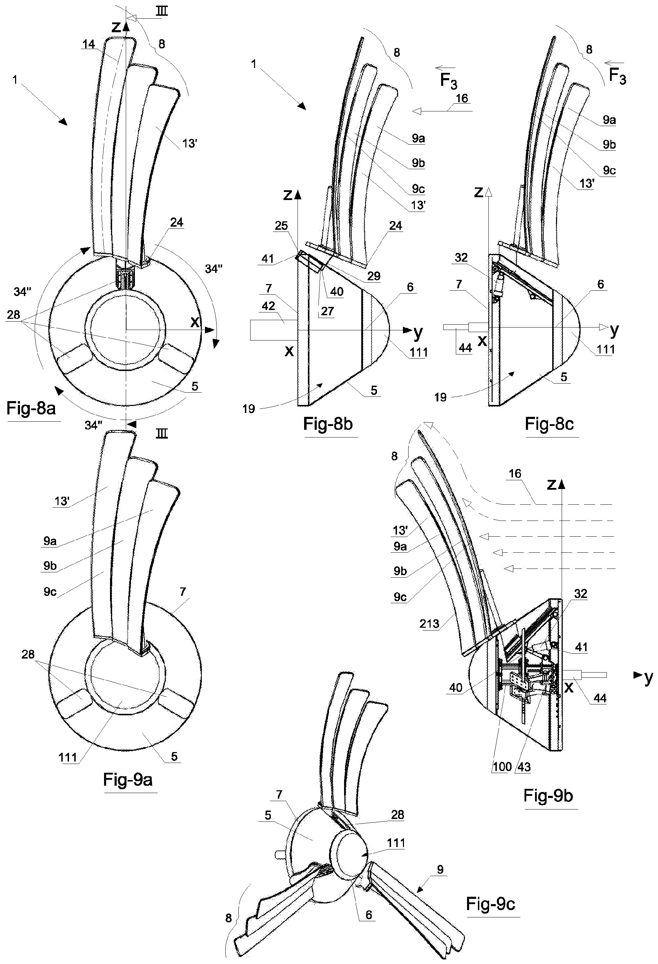

- les figures 9a, 9b, 9c illustrent encore un autre mode de réalisation d'une éolienne comprenant des pales « dynamique » et dans une position de mise en berne ;

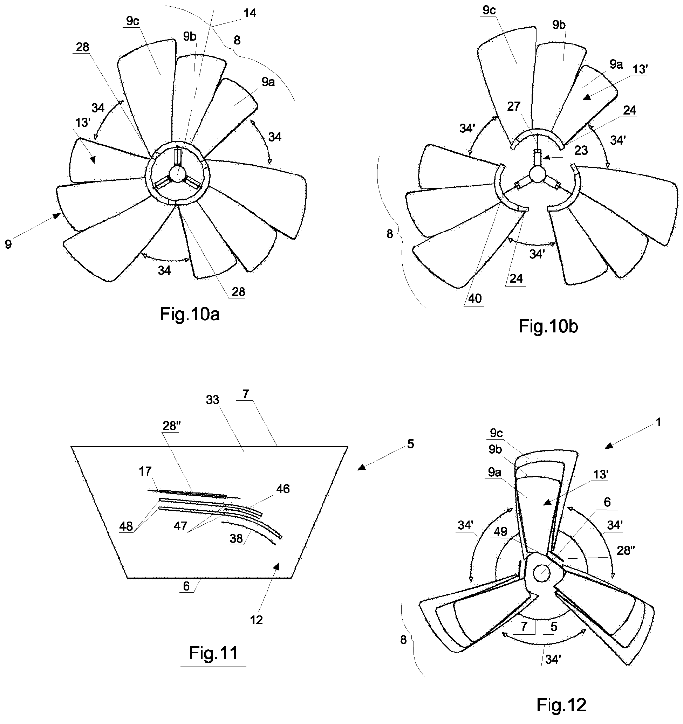

- les figures 10a et 10b représentent schématiquement encore un autre mode de réalisation d'une éolienne comprenant des pales « dynamique »;
- les figures 11 et 12 représentent schématiquement un autre mode de réalisation d'une éolienne comprenant des pales « dynamique »; la figure 11 illustre schématiquement une partie de la surface du rotor aplanie et sur laquelle se présentent des ouvertures traversantes ; La figure 12 est une vue de face des pales sur le rotor ;

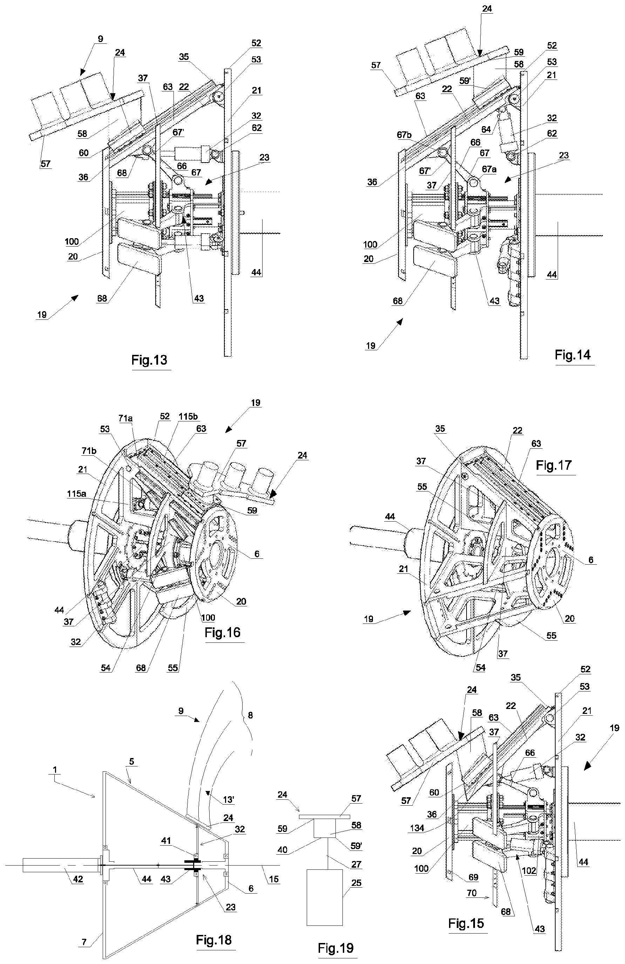

- les figures 13, 14, 15, 16, 17, 22 et 23 représentent une structure et ses variantes coopérant avec des moyens de déplacement et/ou de guidage ;
- les figures 18 et 19 sont encore une variante du mode de réalisation illustré sur les figures 6 à 8 ;

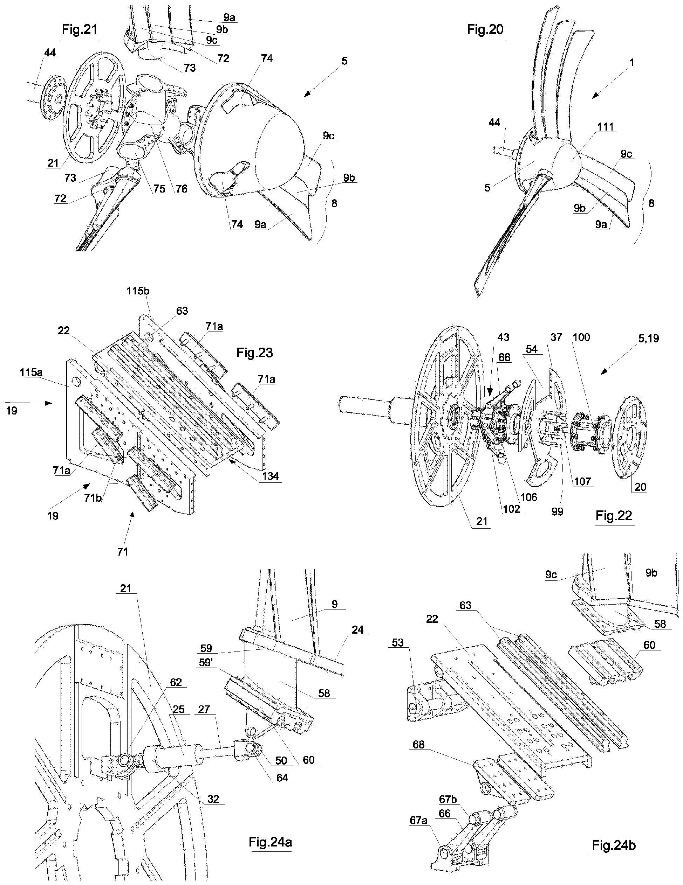

- les figures 20 et 21 sont encore des exemples de réalisation d'une éolienne ;
- Les figures 24a et 24b représentent des vues de détail de la partie interne du rotor, en particulier, des moyens permettant de déplacer et amortir le déplacement ;

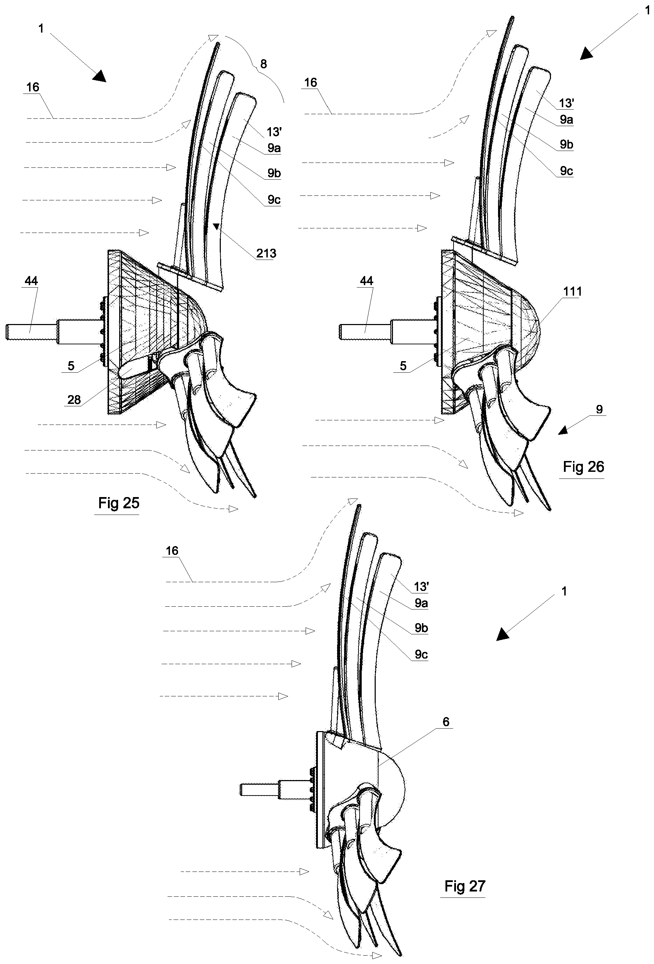

- les figures 25 et 26 illustrent des vues de côté d'un autre mode de réalisation d'une éolienne « dynamique » dans laquelle les éoliennes sont dans une position de sécurité ;
- la figure 27 représente un exemple d'éolienne statique dans une position de sécurité ;

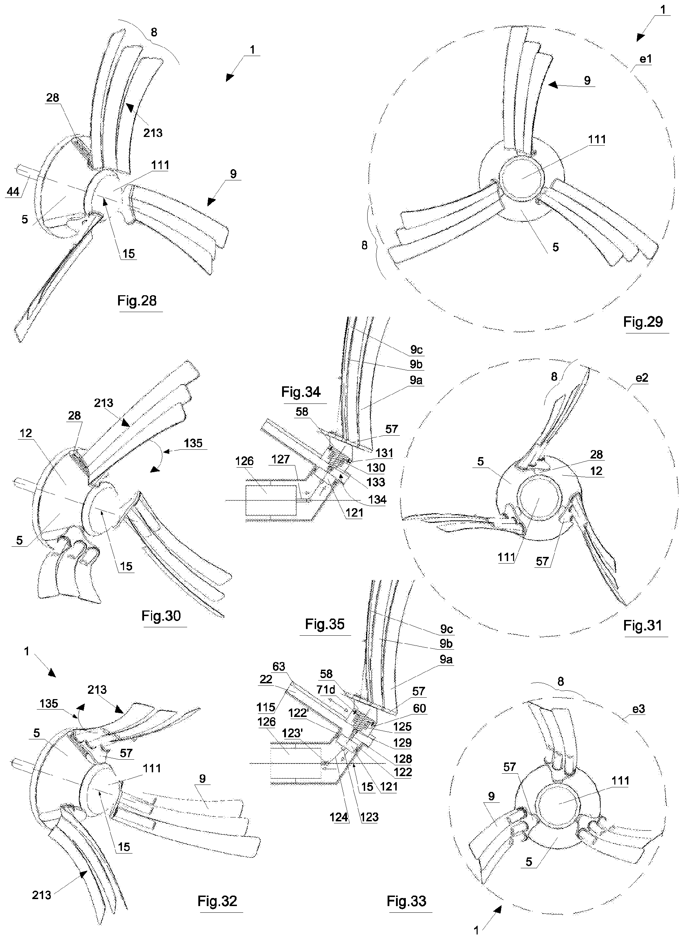

- les figures 28 à 33 illustrent un autre mode de réalisation d'une éolienne « dynamique » dans une position de mise en berne et dans laquelle un support portant les pales effectue une rotation; et
- les figures 34 et 35 sont des vues de détail des moyens de déplacement illustrés sur les figures 28 à 33.

### 6. Description détaillée

La présente invention se rapporte à une éolienne 1 adaptée pour fonctionner avec tout type de vent, c'est-à-dire dans des conditions de vent faible, de vent moyen, et de vent fort. Dans la suite de la description on entend par :
- vent faible : un vent dont la vitesse est comprise entre 0 et 5 à 7 m/s mètres par seconde (m/s) ;
- vent moyen : un vent dont la vitesse est comprise entre 5 à 7 m/s et 10 à 15 m/s ;
- vent fort : un vent dont la vitesse est au-delà de 15 m/s ; et,
- vent violent (tempête, ouragan), un vent dont la vitesse est au-delà de 25 m/s.

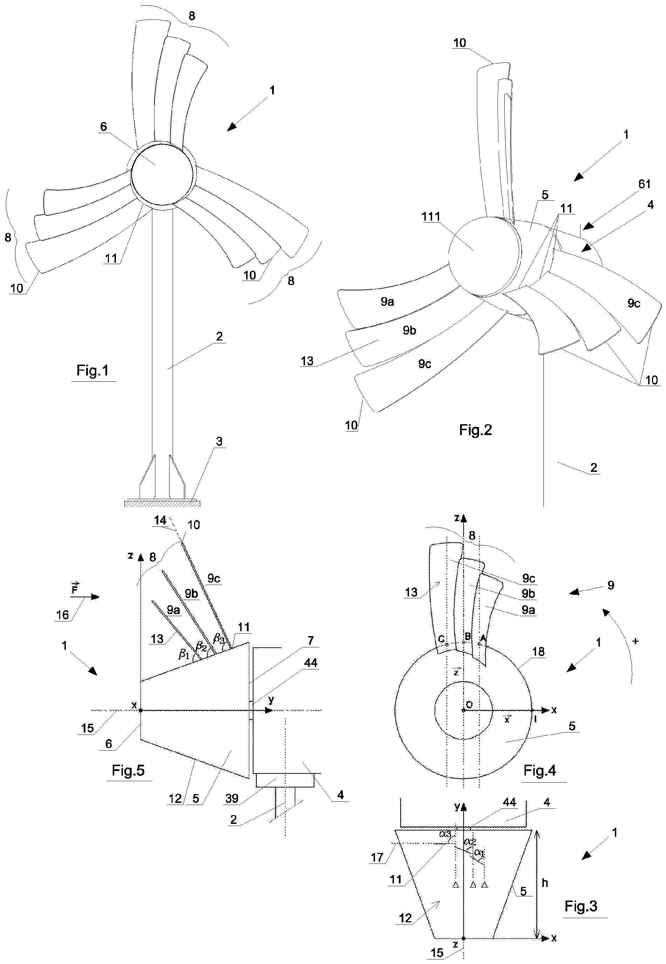

Sur la figure 1, l'éolienne 1 comprend un mât 2 vertical destiné à être fixé au sol (éolienne terrestre (onshore)) ou au fond de la mer (éolienne offshore) au moyen d'une fondation 3. Des haubans ou systèmes d'ancrage peuvent être prévus pour une fixation solide au sol ou pour les fondations 3 flottantes. Le haut du mât 2 est équipé d'une nacelle 4 renfermant les éléments nécessaires à la production d'électricité (non représentés) tels qu'une génératrice électrique et un multiplicateur. La nacelle 4 est disposée sur un châssis 39 (figure 5) mobile par rapport au mât 2 via des roulements (non représentés). L'éolienne 1 comprend également un rotor 5 couplé à la nacelle 4 et permettant d'entraîner la génératrice électrique. Le rotor 5 tourne autour d'un axe 15 horizontal de rotation par rapport au mât 2. L'axe 15 de rotation est sensiblement parallèle à la direction 16 du vent. L'expression sensiblement parallèle signifie parallèle ou sensiblement parallèle. Le rotor 5 comprend un matériau polymère, copolymère, métallique ou un matériau composite. Le matériau composite peut être une résine et une fibre synthétique ou naturelle ou peut comprendre un métal ou un alliage contenant du métal.

Pour faciliter encore la compréhension de l'invention, on considère que le mât 2 s'étend suivant une direction longitudinale verticale Z. Est également représentée la direction transversale horizontale Y suivant laquelle s'étend l'axe de rotation 15 du rotor 5 lequel est perpendiculaire à la direction longitudinale verticale Z et à une direction longitudinale X de sorte que ces trois directions X, Y, Z forment un repère orthogonal direct tel que représenté sur la figure 1.

Les termes « inférieur », « supérieur », « haut », « bas » et « latéral » sont définis par rapport à la direction verticale Z et les termes « avant » et « arrière » sont définis par rapport à la direction Y.

Le rotor 5 présente une face avant 6 dirigée vers le vent et sensiblement perpendiculaire à la direction du vent, une face arrière 7 située vers un support du rotor 5 et une surface externe 12. En réalité la face arrière 7 est dirigée vers la nacelle 4. L'expression sensiblement perpendiculaire signifie perpendiculaire ou sensiblement perpendiculaire. La face avant 6 peut présenter un nez 111 ayant une forme oblongue pour l'aérodynamisme du rotor 5.

Selon le mode de réalisation illustré sur les figures 1 et 2, le rotor 5 présente une section cylindrique. Selon les différents modes de réalisation illustrés sur les figures 3 à 33, le rotor 5 présente une section tronconique. Le rotor 5 porte au moins deux familles 8 distinctes de pales 9 réparties de manière régulière sur la surface externe 12 du rotor 5. On comprend par l'expression « famille de pales », un groupe rassemblant un nombre prédéterminé de pales. Les familles 8 de pales 9 sont identiques de part leur nombre de pales et le positionnement des pales sur le rotor 5. Chaque famille 8 de pales 9 comprend au moins deux pales 9 se dressant sur le rotor 5 suivant une direction principale 14; ces pales étant une pale de réception 9a et une pale de force 9c.

Dans les différents modes de réalisation illustrés, il est représenté un rotor 5 portant trois familles 8 de pales 9 réparties sur le rotor 5 suivant un angle de 120°. Chaque famille 8 comporte trois pales 9. Chaque pale 9 présente une extrémité libre 10 et une extrémité de pied de pale 11 liée au rotor 5. Chaque pale 9 d'une famille présente des dimensions, une implantation, une orientation et/ou une fonction différentes de celles des autres pales. Chaque famille comprend : une pale de réception 9a, une pale de guidage 9b et une pale force 9c. Le vent est d'abord reçu par la pale de réception 9a. Cette dernière capte le vent puis le guide vers la pale de guidage 9b. La pale de guidage 9b guide également le vent vers la pale de force 9c sur laquelle s'accumule le vent. Avec cet agencement, le vent est piégé et il ne peut se libérer qu'en exerçant une force de poussée F successivement sur les pales 9a, 9b, 9c. On comprend alors que la pale de guidage 9b est disposée devant la pale de force 9c selon l'axe 15 de rotation du rotor 5. La pale de réception 9a est disposée devant la pale de guidage 9b selon l'axe 15 de rotation du rotor 5. De la sorte, on augmente le temps de passage du vent en l'obligeant par trois fois (ou n fois, n étant le nombre de pales dans une famille) à transmettre son énergie cinétique. S'il existe n pales dans une famille 8 avec n supérieur à trois, alors toutes les pales 9 situées entre la pale de réception 9a et la pale de force 9c sont des pales de guidage 9b. Entre chaque famille 8 de pales 9 adjacente on a un espace correspondant à une zone d'échappement 34 par laquelle une partie de l'air (vent) s'échappe de l'éolienne 1. Plus précisément, la zone d'échappement 34 se forme entre l'extrémité 11 de pied de pale jusqu'à l'extrémité 10 libre de la pale de réception 9a d'une famille 8 et l'extrémité 11 de pied de pale jusqu'à l'extrémité 10 libre de la pale de force 9c d'une famille 8 de pales adjacente.

La pale de réception 9a présente une longueur réduite par rapport à la pale de guidage 9b qui elle-même présente une longueur réduite par rapport à la pale de force 9c. En d'autres termes, les pales 9a, 9b, 9c de chaque famille 8 sont de dimensions croissantes suivant l'axe 15 de rotation du rotor 5 depuis la face avant 6 vers la face arrière 7 du rotor 5. A l'inverse, l'extrémité 11 de pale de la pale de réception 9a présente (à sa base) une largeur supérieure à celles des pales de guidage 9b et de force 9c. La pale de force 9c présente une extrémité 11 de pale dont la largeur (à sa base) est inférieure à celles des pales de réception 9a et de guidage 9b. L'extrémité 11 de pied de pale de chaque pale 9 présente une longueur inférieure à l'extrémité 10 libre. Une telle disposition contribue également à faire converger le vent de la pale de réception 9a vers la pale de force 9c pour que cette dernière emmagasine un maximum d'énergie. De manière plus précise, la pale de réception de 9a (petite pale) disposée en amont des autres pales d'une famille permet de récupérer au plus tôt une nouvelle masse d'air non perturbée par la dépression créée après le passage de l'air (vent) sur la pale de force 9c (dernière pale) de la famille 8 de pales adjacente (en amont). Puis cette pale de réception 9a transmet l'énergie aux pales suivantes de sa famille tout en ayant au passage déjà emmagasiné une première poussée.

Chaque pale 9 présente également une surface 13 plate telle que représentée sur les figures 1 à 5 ou une surface 13' sensiblement courbée telle que représentée sur les figures 6b, 7b, 8b, 9b, 10b, 12, 18, 20 et 25. De préférence, toutes les pales peuvent être plates (sans être courbées). Les pales 9 peuvent présenter aussi une courbure selon leur direction longitudinale 14 principale.

Comme évoqué précédemment chaque pale 9a, 9b, 9c de chaque famille 8 de pales 9 présente une implantation et orientation particulière sur le rotor 5, elles sont décrites selon un mode de réalisation représenté sur les figures 3, 4 et 5. Dans ce mode de réalisation, le rotor 5 présente une section tronconique. Les pales 9 des familles 8 de pales sont dites « statiques », c'est-à-dire que les pales 9 sont fixes par rapport au rotor 5.

Sur la figure 3 est représenté, en vue de dessus, le rotor 5 portant les pales 9 dans un plan Y, X horizontal formé par les directions Y et X. Une seule famille 8 de pales 9 est représentée ici. Les extrémités 11 de pied de pale 9 de chaque pale membre d'une famille 8 de pales 9 sont décalées successivement sur la surface extérieure 12 du rotor 5 selon son axe de rotation 15. Autrement dit, les pales 9 sont disposées sur la surface externe 12 selon une hauteur différente, la hauteur h du rotor de direction Y (cylindrique ou tronconique) étant traversée par l'axe de rotation 15. Les extrémités 11 de pied de pale 9 s'étendent sur la surface externe 12 suivant une direction 17 dans le plan Y, X et sensiblement transversale à l'axe de rotation 15 du rotor 5. Chaque extrémité 11 de pied de pale 9 est ici rectiligne. Les directions 17 des pieds de pales adjacentes forment sensiblement une courbe orientée depuis la face arrière 7 vers la face avant 6 du rotor 5. Chaque extrémité 11 de pied de pale est agencée sur la surface externe 12 du rotor 5 suivant un angle α prédéterminé formé entre l'axe de rotation du rotor 15 et la direction 17 de l'extrémité de pied de pale 11 dans le plan Y, X. Plus précisément, en traçant une droite Δ parallèle à l'axe 15 de rotation 15 qui coupe la droite déterminant la direction 17 de chaque extrémité 11 de pales, on obtient alors l'angle α prédéterminé dans le plan Y, X. Cet angle α est supérieur à 0° et inférieur ou égale à 90°. La pale de force 9c peut former un angle α₃ qui est sensiblement égale 90°. L'angle α₁ peut être compris entre 35° et 50°. L'angle α₂ peut être compris entre 45° et 75°. L'angle α₂ est de préférence compris entre α₃ et α₁; On comprend que plus la pale est longue, plus l'angle α est grand.

Sur la figure 4, le rotor 5 porte les familles 8 de pales 9 dans un plan X, Z vertical formé par les directions X et Z. Le plan X, Z est perpendiculaire au plan Y, X. Les extrémités 11 de pied de pale 9 sont disposées sur le périmètre du rotor 5 (cylindrique ou tronconique). On a vu précédemment que les extrémités 11 de pied de pale sont décalées par rapport à la hauteur (axe de rotation 15) du rotor 5 et présentent un angle α avec l'axe de rotation 15 dans le plan Y, X. Pour faciliter la compréhension de la description de la figure 4, on suppose que les extrémités 11 de pied de pale 9 sont situées à la même hauteur. On supposera également que la direction Y définit le centre O d'un cercle trigonométrique 18 dans le repère O, X, Z, d'abscisse I et de sens direct (sens antihoraire), les extrémités 11 des pales 9 étant disposées sur le périmètre du cercle trigonométrique 18. Le centre de la longueur de l'extrémité 11 de pied de pale de la pale de réception 9a définit un point A appartenant au cercle. Par conséquent, l'angle IOA forme par exemple un angle d'environ 5π/12 radians correspondant à environ 75° dans le plan Z, X. Le centre B de la longueur de l'extrémité 11 de pied de pale de la pale de guidage 9b appartenant au cercle, forme un angle IOB d'environ π/2 radians correspondant à 90° dans le plan Z, X. Le centre C de la longueur de l'extrémité 11 de pied de pale de la pale de force 9c appartenant au cercle, forme un angle IOC d'environ 7π/12 radians correspondant à environ 105° dans le plan Z, X. En d'autres termes, les pales 9a, 9b, et 9c sont décalées entre elles sur la surface externe 12 du rotor 5 par rapport à l'axe Z dans le plan Z, X. Bien entendu, la position des pales 9 sur le périmètre du rotor 5 dépend du nombre de pales 9 dans une famille 8 de pales 9 et de l'envergure de l'éolienne 1. Nous comprenons que cette configuration (orientation et implantation) des pales par rapport à la surface du rotor 5) contribue à la capacité d'accélération du rotor 5. En effet, une première zone de dépression créée après le passage du vent sur la pale de réception 9a permet l'accélération de la pale de guidage 9b suivante. Cette dernière peut encore recevoir du vent/de l'énergie car elle est plus grande que la pale de réception 9a et ainsi de suite. Ainsi, la pale de guidage 9b accélère et emmagasine de l'énergie tout en transmettant une partie du vent/énergie à la pale suivante et ainsi de suite. Par ailleurs, les zones de dépression sont canalisées ce qui réduit les perturbations de l'air à la sortie du rotor. Sur la figure 5 est une vue de côté des pales 9 du rotor 5 portant les pales dans un plan Z, Y vertical formé par les directions Z et Y. Le plan Z, Y est perpendiculaire au plan Y, X. Ici n'est représentée qu'une famille de pales. Les pales 9a, 9b, 9c de chaque famille 9 présentent une inclinaison par rapport à la surface externe 12 du rotor 5 qui est orientée vers la face avant 6 du rotor 5. La direction du vent 16 est orientée vers la face avant 6 du rotor 5. La direction longitudinale 14 suivant laquelle sont dressées les pales 9a, 9b, 9c sur le rotor 5 forme un angle β prédéterminé avec la surface externe 12 du rotor 5 dans le plan Z, Y. L'angle β prédéterminé est supérieur à 0° et inférieur ou égale à 90° dans le plan Z, Y. Plus précisément, la direction longitudinale 14 principale de la pale de réception 9a forme un angle β₁ avec la surface externe 12 du rotor 5. La direction longitudinale 14 principale de la pale de guidage 9b forme un angle β₂ avec la surface externe 12 du rotor 5. La direction longitudinale 14 principale de la pale de force 9c forme un angle β₃ avec la surface externe 12 du rotor 5. L'angle β₁ est inférieur à l'angle β₂. Ce dernier est également inférieur à l'angle β₃. L'angle β₃ peut être sensiblement égal à 90° dans le plan Z, Y. L'angle β₂ peut être compris entre 45° et 75° dans le plan Z, Y. De préférence, l'angle β₂ est compris entre β₁ et β₂. L'angle β₁ peut être compris entre 35° et 50° dans le plan Z, Y. On comprend également que plus la pale 9 est grande, plus l'angle β est grand.

Il est prévu des petites éoliennes 1 de tailles réduites et peu encombrantes et des éoliennes 1 de moyennes dimensions ou présentant les dimensions d'une éolienne classique. Concernant les petites éoliennes, le rotor 5 et les pales 9 sont formés d'un seul tenant tel qu'illustré sur la figure 20 ou formés d'un assemblage de pièces moulées. Le rotor 5 est avantageusement obtenu par moulage. On peut prévoir des petites éoliennes statiques pour chaque type de vent. Pour les moyennes et grandes éoliennes statiques voir par exemple la figure 21, chaque pale 9a, 9b, 9c d'une famille 8 de pales 9 est montée sur une base avec la même implantation et orientation décrites ci-dessus. La base 72 est montée sur le rotor 5 au moyen d'un manchon 73 à travers un orifice 74 que comprend le rotor 5. Le manchon 73 est emmanché dans une cavité 75 d'un ensemble 76 solidaire de l'arbre 44.

Selon d'autres modes de réalisation représentés sur les figures 6, 7, 8, 9, 10, 13, 14, 16, 17, 18, 25, 26, 28 (éoliennes dynamiques), l'éolienne 1 comprend des familles 8 de pales dynamiques, chaque famille 8 de pales 9 se déplaçant par rapport au rotor 5, ici, de section tronconique pour s'adapter à des vents faibles, moyens ou forts. Pour les versions dites « dynamiques » on reprend exactement les mêmes situations de positionnement (dimensions, implantations, orientations) des pales 9 dans une famille 8 sur le rotor 5 comme vu précédemment dans les familles « statiques ». Toutefois, ici chaque famille 8 de pales 9 est considérée comme un bloc ou un ensemble fixe par rapport à un support 24 mais qui peut se mouvoir ou évoluer dans l'espace par rapport au rotor 5. En d'autres termes, les familles 8 de pales conservent la configuration et l'agencement des pales statiques (orientation, inclinaison sur la surface externe 12 du rotor) mais évoluent par bloc et de façon synchronisée afin d'optimiser le rendement de l'éolienne en fonction des différentes forces du vent.

Des moyens de déplacements 23 sont prévus pour déplacer les familles 8 de pales 9 entre une position initiale dans laquelle les familles 8 de pales sont proches de l'axe horizontal 15 de rotation du rotor 5 (proche de la face avant 6) et une position développée dans laquelle les familles 8 de pales 9 sont situées à distance de l'axe de rotation 15 du rotor 5 (proche de la face arrière 7). Dans la position initiale, Les moyens de déplacement 23 comprennent au moins un vérin 32 ou une vis sans fin. De préférence, il s'agit de vérins 32 comprenant chacun un cylindre 25 dans lequel coulisse un ensemble piston 26 et tige 27.

L'éolienne 1 dite dynamique comprend une structure 19 telle que représentée par exemple sur les figures 6 à 9 et 13, et en particulier sur la figure 17. La structure 19 présente également une section tronconique pour s'adapter à la forme du rotor 5. La structure 19 comporte une première 20 et une seconde 21 plateformes montées suivant une liaison encastrement sur un arbre 44 de rotation du rotor 5. La structure 19 comprend des profilés 22 montés fixes par exemple sur les figures 6 à 8 et 17, 28 à 33 sur deux traverses 115a et 115b qui sont agencées entre les première 20 et seconde 21 plateformes. Les profilés 22 sont également fixes par rapport aux première 20 et seconde 21 plateformes (par exemple sur la figure 17). Les profilés 22 peuvent être également montés mobiles par rapport aux traverses 115a et 115b (par exemple sur les figures 13 à 16) et aux première 20 et seconde 21 plateformes. Dans le cas des profilés 22 mobiles, chaque profilé 22 a une première extrémité 35 liée vers la périphérie 52 de la seconde 21 plateforme suivant une liaison pivot 53 et une seconde extrémité 36 libre. Un plateau 37 est monté fixe sur l'arbre 44 et est situé entre les première 20 et seconde 21 plateformes. Le plateau 37 présente des découpures 54 ou ouvertures recevant les traverses 115a, 115b et permettant chacune le passage d'un profilé 22 lors de son pivotement autour de la liaison pivot 53. Entre les découpures 54 le plateau 37 forme des entretoises 55 entre les profilés 22 pour maintenir un écartement entre eux et rigidifier la structure 19. Cette dernière comprend ici un profilé 22 pour chaque famille 8 de pales 9. La différence de diamètres des première 20 et seconde 21 plateformes implique que la direction suivant laquelle s'allonge chaque profilé 22 forme une pente par rapport aux première 20 et seconde 21 plateformes.

Les familles 8 de pales sont montées chacune sur le support 24 lié au moins aux moyens de déplacements 23. De la sorte, lors d'un déplacement c'est le support 24 qui se déplace ce qui entraine le déplacement simultané des familles 8 de pales 9. Le support 24 est disposé sur la surface externe 12 du rotor 5 et est mobile par rapport à celle-ci. Le support 24 comporte un pied 58 supportant à une de ses extrémités 59 une platine 57.

La platine 57 (par exemple sur les figures 15, 16) peut présenter tout type de forme quadrangulaire, pluri-angulaire ou circulaire. La platine 57 présente une longueur principale sensiblement égale à la somme des longueurs des extrémités 11 de pied de pale des pales 9 dans une famille 8. La largeur principale de la platine 57 correspond sensiblement à une portion de la hauteur du rotor 5 laquelle correspond à la distance entre une des extrémités (la plus proche de la face avant 6) de l'extrémité 11 de pied de pale de la pale de réception 9a et une des extrémités (la plus proche de la face arrière 7) de l'extrémité 11 de pied de pale de la pale de force 9c. La platine 57 peut surplomber le nez 111 de l'éolienne. Le support 24 peut se trouver alors en avant de la face avant 6 de l'éolienne 1 pour permettre aux familles de pales de fermer au maximum la zone d'échappement 34 de l'air en configuration de vent faible.

La paroi 33 du rotor 5 comporte des ouvertures traversantes 28 et 28" traversant de part et d'autre la paroi 33.

Selon les modes de réalisation des figures 6a, 6b, 6d, 7a, 7b, 8a et 8b un vérin 32 est agencé dans chaque profilé 22. Le cylindre 25 du vérin 32 est fixe par rapport au profilé 22 et est monté parallèle à la surface externe 12 du rotor 5. L'ouverture traversante 28 s'étend longitudinalement suivant l'axe de rotation 15 du rotor 5. L'ouverture traversante 28 permet le passage d'un bras 29 qui comprend une première 30 extrémité solidarisée à l'extrémité libre du pied 58 du support 24 et une deuxième 31 extrémité solidarisée à une extrémité distale 40 de la tige 27 du piston du vérin 32. Avantageusement, le bras 29 est fixé à la tige 27 suivant une direction parallèle à l'axe Z. Chaque ouverture traversante 28 présente une longueur sensiblement égale à la hauteur du rotor 5. Au moins un capteur 50 d'effort (représenté schématiquement figures 6d et 24a) est fixé par tous moyens adéquats aux moyens de déplacements 23. En l'occurrence, le capteur 50 d'effort est fixé à l'extrémité distale 40 de la tige 27 du vérin 32. Le capteur 50 d'effort est relié électriquement à un circuit électronique (non représenté) qui est disposé dans le rotor 5 ou dans un boitier (non représenté) installé vers la face arrière 7 du rotor 5. Le capteur 50 d'effort mesure la force du vent exercée sur la famille de pales laquelle est reliée à la tige 27 du vérin 32 via le support 24. Le circuit électronique comprend un microcontrôleur comprenant des paramètres de vent. Le vérin 32 présente entre autres des moyens de connexion électrique à un moteur électrique 42 située vers la face arrière 7 du rotor 5, le moteur électrique 42 étant relié au microcontrôleur. Un anémomètre 61 (représenté schématiquement) peut être également prévu sur la nacelle 4, les pales 9, ou dans le parc éolien pour déterminer la vitesse ou pression du vent.

Lorsque la force exercée du vent est supérieure à une force prédéterminée, un microcontrôleur commande le moteur électrique 42 qui actionne alors les vérins 32 pour déplacer les familles de pales. Lorsque le piston 26 se déplace dans le cylindre 25, la tige 27 entraine le bras 29 dans un mouvement de translation à travers l'ouverture traversante 28 longitudinale.

Sur les figures 6a (vue de face), 6b et 6d (vues en coupe selon le plan I-I), l'éolienne 1 fait face à un vent faible qui exerce une force de poussée F₁ sur les familles de pales lesquelles se situent alors à proximité de la face avant 6 du rotor 5. Dans cette situation, la tige 27 de piston 26 est complètement sortie. La zone d'échappement 34 dite ici initiale est réduite et l'envergure (diamètre de la pale de force) est réduite. Sur les figures 7a (vue de face) et 7b (vues en coupe selon le plan II-II), les pales 9 de l'éolienne 1 subissent une force de poussée F₂ d'un vent moyen. La force de poussée F₂ est supérieure à la force de poussée F₁. Ainsi, le piston 26 se déplace en translation dans le cylindre 25 dans une direction parallèle à la surface externe 12 du rotor (ici de la face avant 6 vers la face arrière 7 du rotor 5). Les familles 8 de pales se déplacent en même temps suivant une translation parallèle à la surface externe 12 du rotor orientée de la face avant 6 vers la face l'arrière 7 et inversement. Les familles 8 de pales 9 se trouvent alors environ à mi-distance de la longueur de l'ouverture 28 traversante. Nous comprenons qu'après le déplacement des pales 9a, 9b, 9c, ces dernières font toujours face au vent. En déplaçant les familles 8 de pales, on fait varier la surface de la zone d'échappement 34. Dans cette configuration, la surface de la zone d'échappement 34' est supérieure à la surface de la zone d'échappement 34 initial lorsque les pales 9 sont à proximité de la face avant 6 ce qui augmente la capacité de la zone d'échappement 34' permettant l'écoulement de plus d'air. L'envergure de l'éolienne augmente ainsi. En d'autres termes, plus le vent est fort, plus l'espace correspondant à la zone d'échappement 34, 34', 34" doit être grand pour évacuer le surplus d'air risquant de ralentir la rotation du rotor 5.

Sur les figures 8a (vue de face) et figure 8b (vues en coupe selon le plan III-III), l'éolienne 1 fait face à un vent fort qui exerce une force de poussée F₃ sur les familles 8 de pales, la force de poussée F3 étant supérieure à la force de poussée F₂. Le piston effectue une translation en direction de la face arrière 7 du rotor pour effectuer une course complète. Les familles 8 de pales se déplacent de manière analogue aux figures 7a et 7b et se situent alors à proximité de la face arrière 7 du rotor 5. Ainsi, comme précédemment, nous comprenons qu'après le déplacement des pales 9a, 9b, 9c, ces dernières font toujours face au vent. La surface de la zone d'échappement 34" se trouve alors supérieure à la surface de la zone d'échappement 34' de sorte à augmenter davantage l'écoulement de l'air à travers cette zone et diminuer (la prise au vent sur les pales 9) la proportion de la prise au vent des pales par rapport à la surface balayée (surface balayée par la pale de force en rotation).

Les figures 6c, 7c, 8c, 17 et 24a représentent une variante du mode de réalisation illustré sur les figures 6a, 6b, 6d, 7a, 7b, 8a et 8b, où le vérin 32 comprend deux liaisons pivots qui lui permettent de se décaler de l'axe de déplacement du support 24 (voir le détail de la figure 24a). L'extrémité 41 proximale du vérin 32 est montée pivotante sur la seconde 21 plateforme de la structure 19 via une articulation 62. Cette liaison pivot 62 se positionne plus proche de l'axe de rotation 15 de la plateforme 21 et permet ainsi de libérer de l'espace pour le coulissement du support 24 vers la périphérie de la structure 21. Le pied 58 du support 24 comprend une embase 60 à son autre extrémité 59' qui présente une forme en U. Cette embase 60 est destinée à coopérer avec un rail 63 longitudinal de section en forme de U qui est fixé dans chaque profilé 22 de la structure 19. L'embase 60 est également liée via une liaison pivot 64 à l'extrémité distale 40 de la tige 27 de piston 26 du vérin 32. La figure 17 représente en perspective la structure 19 avec les profilé 22 fixent par rapport à la première 20 et seconde plateforme 21. A l'instar du mode de réalisation précédent, le support 24 peut se déplacer de bas en haut et inversement suivant la pente définie par le rotor 5. Par le nouvel agencement du vérin 32, l'embase 60 peut coulisser plus haut et autorise donc une position développée de l'éolienne 1 plus grande que précédemment.

Dans une variante préférée de ce mode de réalisation, les vérins 32 sont aptes à être mobiles par la seule poussée du vent (sans l'action du moteur 42) pour déplacer les familles 8 de pales 9 via le support 24. Les familles 8 de pales 9 se déplacent donc de la position initiale vers la position développée par la poussée du vent exercée sur les pales 9. Les familles 8 de pales 9 reviennent en position initiale sous l'effet de leur poids. La résistance du vérin 32 sera au préalable calibrée par rapport au choix souhaité (impliquant aucune intervention extérieur comme électronique, électrique ou hydraulique à partir de vents faibles et jusqu'à des gammes de fonctionnement acceptable en vent fort et non violent) : plus le vent sera fort (force centrifuge) et plus la résistance de vérin 32 sera importante, ramenant naturellement les pales 9 en position basse (position initiale) lorsque le vent faiblira. Les trois vérins 32 fonctionnent indépendamment, car sans commande. Seule la poussée du vent sera motrice. La vitesse de rotation fera que les efforts subis par les vérins 32 seront quasiment identiques et réagiront de la même façon et au même moment. Tels que susmentionnés dans les modes de réalisation précédents, les pales 9 de chaque famille 8 conservent leurs positions initiales les unes par rapport aux autres (sur le support 24) suivant la même configuration des éoliennes statiques décrites précédemment.

Selon un autre mode réalisation comme on peut le voir sur les figures 9b, 9c et 15, l'éolienne 1 dynamique se présente dans une position de mise en berne à « bascule ». La position de mise en berne fait suite à la position de mise en sécurité que peut prendre l'éolienne 1 dynamique telle qu'illustrée par exemple sur les figures 9, 13, 14 et 16. Ce mode de réalisation de l'éolienne dynamique à « bascule », est davantage réservé aux zones dans lesquelles des vents violents peuvent intervenir.

Le mouvement dynamique des pales 9 reste identique à celui des pales des éoliennes illustrées sur les figures 6 à 8. Dans ce mode de réalisation, et plus spécialement lors de la mise en berne ou de la remise en position de fonctionnement (reprise du mouvement dynamique des pales le long du rotor en fonction de la force du vent) des moyens de déplacement 23 comprennent le vérin 32 et également au moins une bielle 66 dont une extrémité 67 est articulée sur un ensemble coulissant 43 coulissant sur l'arbre 44. L'autre extrémité 67' opposée est également articulée avec une base 68 solidaire des profilés 22. La base 68 est solidaire du profilé 22 vers l'extrémité 36 libre. Dans ce cas présent, deux bielles 66 supportent (en particulier les bases 68) un profilé 22. L'ensemble coulissant 43 comprend un vérin 100 central qui amortit le basculement du support 24. Dans notre cas présent, le vérin 32 étant lié à l'embase 60, il suit donc le mouvement de basculement des profilés 22. Cependant, le vérin 32 n'amortit que dans une moindre mesure le basculement des profilés 22, cette fonction étant réservée au vérin central 100. Ce dernier est monté sur l'arbre 44 du rotor 5 et se déplace entre les première 20 et seconde 21 plateformes. L'ensemble coulissant 43 est connecté via des moyens de connexion mécaniques et électriques au moteur électrique 42 situé vers la face arrière 7.

Dans ce mode de réalisation (voir les figures 15 et 22), le moyen de déplacement 23 comprenant l'ensemble coulissant 43 est déclenché soit manuellement par un opérateur, soit est commandé par le microcontrôleur recevant des informations du capteur 50 ou soit est encore commandé à distance par l'opérateur via un ordinateur de bord recevant des informations de l'anémomètre 61 ou selon d'autres indices météorologiques. Il s'opère lorsque les vents sont violents et que l'opérateur estime nécessaire de mettre en berne l'éolienne 1 dynamique à bascule. Pour cela l'éolienne 1 aura été préalablement mise dos au vent, en position basse de sécurité (figure 15 par exemple). Dans le cadre de la mise en berne, les profilés 22 sont mobiles par rapport aux première 20 et seconde 21 plateformes. L'ensemble coulissant 43 assure le basculement du profilé 22 entre une position de fonctionnement dans laquelle l'extrémité 36 libre est affleurant avec la surface 69 de la première plateforme et une position de mise en berne dans laquelle l'extrémité 36 libre est non affleurant avec la surface 69 et à l'intérieur du rotor 5. La partie motrice de l'ensemble coulissant 43 est générée par le vérin 100 et/ou le poids des pales 9. Le vérin 100 comprend une tige 107 qui est liée par une joue 106 à un coulisseau 102. Ce dernier se déplace suivant l'axe de rotation de l'arbre 44. Le déplacement de l'ensemble coulissant 43 et du profilé 22 est opéré via au moins la bielle 66 et deux liaisons pivot 67a et 67b à l'endroit des articulations des extrémités 67, 67. Plus précisément, en position de fonctionnement, les familles 8 de pales 9 se trouvent à proximité de la face avant 6 (ici première plateforme 20). Le coulisseau 102 est situé à proximité de la face avant 6. Le piston 107 du vérin 100 est rentré et le vérin 100 est également à proximité de la première plateforme 20. Chaque embase 60 est bloquée en position par des moyens de blocage situé en partie inférieure 134 de l'embase 60. La structure 19 comprend des moyens de verrouillage 71 (voir la figure 23) bloquant les profilés 22 sur les traverses 115a, 115b. Pour passer de la position de fonctionnement à la position de mise en berne, l'opérateur actionne des moyens de verrouillage 71a pour libérer les profilés 22 des traverses 115a, 115b. Chaque profilé 22 effectue alors une rotation (basculement) vers le centre du rotor 5 via la liaison pivot 53. L'ensemble coulissant 43 supportant les bielles 66 opère donc simultanément une translation suivant la flèche 70, ce qui abaisse (dans le plan Z, Y de la figure 15) l'extrémité 36 libre. Cette dernière n'est alors plus adjacente avec une surface 69 de la première plateforme 20. Dans la position de mise en berne, le coulisseau 102 est localisé après la rotation à proximité de la seconde plateforme 21. La rotation des profilés 22 est amortie par le vérin 100 central. Une partie du pied 58 ou l'ensemble du pied se trouve à l'intérieur du rotor 5. Le support 24 est affleurant avec la surface de 12 du rotor 5 dans la position de mise en berne. Chaque profilé 22 est ensuite bloqué dans cette position de mise en berne par des moyens de verrouillages 71b sur les traverses 115a, 115b. Les familles 8 de pales 9 dans la position de mise en berne, présentent une plus faible circonférence diminuant ainsi la surface de prise au vent.

Lorsque l'ouragan est passé et que les phases de contrôle avant la remise en fonctionnement sont effectuées, l'opérateur intervient physiquement ou à distance sur l'éolienne 1 pour débloquer les profilés 22 de leur position de mise en berne en débloquant les moyens de verrouillage 71b. La tige 127 du vérin 100 se déplace en sens inverse (inverse de 70) pour ramener l'ensemble coulissant 43 dans une position proche de la première plateforme 20. Cela permet de ramener les familles 8 de pales 9 en position de fonctionnement.

L'extrémité libre 36 est alors affleurant avec la première plateforme 20 (périphérie). Dès lors les profilés 22 sont verrouillés au moyen des moyens de verrouillage 71a. L'embase 60 est débloquée par des moyens de blocage 134 pour permettre le coulissement de celle-ci le long de des rails 63.

Selon encore une autre variante de ce mode de réalisation illustrée en figures 18 et 19, les moyens de déplacement 23 comprennent également au moins un vérin 32 disposé dans le rotor 5 suivant une direction parallèle aux faces avant 6 et/ou arrière 7. Dans l'exemple d'un vérin (voir figure 18), l'extrémité distale 40 de la tige 27 est fixée à l'extrémité 59' du pied 58 du support 24 et l'extrémité proximale 41 du cylindre 25 est fixée sur l'ensemble coulissant 43. Dans une autre variante de ce mode de réalisation, l'extrémité distale de la tige 27 du piston 26 peut être solidarisée à la platine 57 (le support 24 ne comportant pas alors de pied 58). Les moyens de déplacement 23 peuvent être également situés à l'extérieur du rotor 5, vers la face arrière 7 du rotor 5, ce qui libère la partie centrale interne du rotor 5.

Les figures 25, 26 et 27 illustrent encore un autre mode de réalisation de l'éolienne 1 dans un exemple de situation dans laquelle les vents sont violents (vent très forts, cyclone, tempête) et nécessitant la mise en sécurité de l'éolienne 1 statique ou dynamique. Pour mettre l'éolienne 1 en position de sécurité, il est nécessaire de mettre le rotor 5 « dos » au vent. Cela est généralement exécuté en faisant pivoter le châssis 39 par rapport à l'axe du mat 2 de l'éolienne 1. Les familles 8 de pales 9 sont alors dos à la direction 16 du vent. Dans le cas d'une éolienne 1 dynamique, celle-ci se trouve de préférence dans une position initiale qui correspond ici à la position initiale (vent faible), c'est-à-dire que les familles 8 de pales 9 se trouvent à proximité de la face avant 6 (voir figures 6b et 25). La position de sécurité peut également débuter avec une position initiale correspondant à la position développée (de vent fort) (voir figures 8b et 26).

Pour une éolienne statique devant être mise dans une position de sécurité (figure 27 par exemple), il suffit de tourner le châssis 39 pour que les pales soient dos au vent.

Les figures 28 à 35 illustrent un autre mode de réalisation de mise en berne préféré de l'éolienne 1 à partir de la position de mise en sécurité où les familles de pales sont en position haute (position développée illustrée par exemple sur la figure 26) ou de préférence où les familles de pales 9 sont en position basse (position initiale (voir par exemple la figure 25). Dans cette position de mise en berne, le support 24 présente des moyens de mise en rotation lui permettant d'effectuer une rotation suivant un axe 133 traversant le pied 58 du support 24. Cette mise en berne dite par rotation, a pour objectif de réduire considérablement la prise au vent en présentant une envergure inférieure ou au moins identique à celle de la configuration de mise en berne à bascule comme vue précédemment, pour des vents violents. Cette configuration permet de rapprocher les familles 8 de pales 9 entre elles, en ramenant les extrémités 10 des pales 9 au plus près de l'axe de rotation 15 du rotor 5. Le pied 58 du support 24 de la famille 8 de pales 9 présente un arbre 130 pivotant autour de l'axe de rotation 133 à l'aide de roulements 125. Cet arbre 130 présente une extrémité inférieure liée à une pièce femelle 129 destinée à coopérer avec une partie d'un arbre 128 crénelé de type prise de force. Cet arbre 128 est connecté à un moteur 121 électrique coulissant entre les traverses 115a, 115b au moyen de rails de guidage 122 installés entre les traverses 115a, 115b. Le moteur coulisse dans les rails de guidage 122 sous l'action d'un vérin 126 via une tige 127, d'au moins une bielle 124 et de liaisons pivots 123 et 123'. Le moteur 121 est mobile entre une première position d'actionnement de la rotation du support 24 dans laquelle l'arbre 128 est connecté à la pièce femelle 129 et une deuxième position neutre dans laquelle l'arbre 128 est déconnecté de la pièce femelle 129. Il est prévu un moteur 121 par famille de pales. Le vérin 126 est monté sur l'arbre 44 et la tige 127 du vérin 126 se déplace suivant l'axe de rotation 15.

Dans une première variante de ce mode de réalisation, l'embase 60 est montée sur un plateau pivotant muni dans sa partie inférieure de la pièce femelle 129 destinée à être connectée directement à l'arbre 128 (pas d'arbre 130 dans cette variante). Pour permettre la rotation du plateau pivotant et l'embase 60, le rail 63 comprend une gorge (non représentée) permettant le passage de la partie inférieure de l'embase 60.

Dans une deuxième variante préférée de ce mode de réalisation, la partie supérieure de l'arbre 130 est liée à l'embase 60. Dans cette variante, les profilés 22 sont fixes par rapport aux traverses 115a, 115b et des premières et secondes plateformes (figures 34 et 35). Des moyens de verrouillage 71d (figure 35) bloquent ou libèrent la rotation de l'arbre 130. L'embase 60 est au préalable verrouillée par le moyen de blocage situé en partie inférieure 134 de l'embase 60 empêchant le coulissement de l'embase 60 le long des rails 63. Lorsque la tige 127 de vérin 126 est rentrée (figure 35), le moteur 121 se trouve alors dans la position neutre et il n'y a pas d'entraînement possible. Lorsque la tige 127 vérin 126 est sortie (figure 34), le moteur 121 se trouve alors en position d'actionnement, l'arbre 128 entrainant alors l'arbre 130 qui autorise la rotation du support 24 sur lequel se trouve les pales 9. Pour autoriser la rotation du support 24 après connexion de l'arbre 128 et de la pièce femelle 129, on déverrouille l'arbre 130 de l'embase 60 à l'aide des moyens de verrouillage 71d. Le moteur 121, les moyens de verrouillage 71d, le vérin 126 et les moyens de blocage peuvent être actionnés à distance. Le support 24 peut pivoter suivant un angle de rotation compris entre 0 et 360°. De préférence, le support 24 pivote entre 0° et 180°. Après le passage de l'ouragan et des vérifications, on actionne le moteur 121 pour ramener les familles 8 de pales 9 à leur position initiale de fonctionnement (soit par rotation inverse, soit dans le même sens en faisant un 360°). Les figures 30 et 31 illustrent un pivotement intermédiaire d'un angle de 90°. Un capteur de position 131 placé par exemple entre l'arbre 130 et l'embase 60 permet l'arrêt de la rotation du moteur 121, lorsque la position de mise en berne est finalisée c'est à dire lorsque le pied 58 a pivoté de 180° (Figures 32 et 33) dans le sens horaire (flèche 135). Lorsque le support 24 atteint un angle de 180°, la face avant 213 que présente chaque pale 9a, 9b, 9c des familles 8 de pales se trouve face au vent à l'inverse de la position de sécurité dans laquelle la face avant 213 des pales est dos au vent. L'envergure e1, e2, e3 de la pale de force 9c diminue donc de e1 à e3 avec e1>e2>e3, en fonction de l'angle occupé par le support.

Sur les figures 10a et 10b est illustré encore un autre mode de réalisation de l'éolienne 1 comprenant des familles 8 de pales dynamiques. Sur la figure 10a les familles 8 de pales se trouvent dans la position initiale proche de l'axe de rotation 15 du rotor 5. Pour faire face à un vent fort, les familles 8 de pales se déplacent en même temps vers la position développée dans laquelle les familles 8 de pales sont situées à distance de l'axe horizontal 15 du rotor au moyen des moyens de déplacement 23. Les familles 8 de pales sont également montées chacune sur un support 24. Les derniers 24 sont disposés sur la surface externe 12 du rotor 5. Chaque support 24 est fixé, ici, à l'extrémité distale de la tige 27 de piston se déplaçant en translation dans le cylindre 25 suivant la direction radiale du rotor 5. La paroi 33 comporte également des ouvertures 28' traversantes permettant le passage de la tige 27 de piston 26 se déplaçant entre la position initiale et la position développée. Lors du déplacement de l'ensemble piston-vérin agissant sur le support 24, celui-ci déplace les familles 8 de pales selon un mouvement radial, la tige 27 poussant le support 24 par rapport à l'axe de rotation 15 du rotor 5. Ainsi, sur la figure 10b, le support 24 et les pales 9a, 9b, 9c sont à distance de la surface de rotor 5, toutefois, les pales gardent la configuration de la position initiale. Nous comprenons dans ce mode de réalisation, qu'après le déplacement des pales 9a, 9b, 9c, ces dernières font toujours face au vent. En déplaçant les familles 8 de pales, on fait également varier la surface de la zone d'échappement 34. Sur la figure 10b, la surface de la zone d'échappement 34' est supérieure à la surface de la zone d'échappement 34 initial lorsque les pales 9 sont à proximité de la surface du rotor 5.

Les figures 11 et 12 représentent encore un autre mode de réalisation de l'éolienne comprenant des familles 8 de pales dynamiques. Selon ce mode de réalisation, la paroi 33 du rotor 5 comprend des ouvertures 28" traversantes (voir figure 14) permettant le déplacement des pales 9. Les ouvertures traversantes 28" s'étendent suivant une courbe 46. En particulier, La courbe 46 que forme les ouvertures traversantes 28" présentent une première portion 47 s'étendant sensiblement longitudinalement depuis la face avant 6 vers la face arrière 7 et une deuxième portion 48 s'étendant suivant une direction sensiblement parallèle à la direction 17 de l'extrémité 11 de pied de pale de la pale de force 9c. Des moyens de guidage 45 installés dans le rotor 5 déplacent chaque pale d'une famille 8 sensiblement suivant une rotation, ici dans le sens de la flèche 38, autour de l'axe de rotation du rotor 5 entre une position initiale dans laquelle les pales 9 sont proches de l'axe de rotation; et une position escamotée dans laquelle les pales sont toujours proches de l'axe de rotation et placées les unes derrière les autres. De même, dans ce mode de réalisation, nous comprenons qu'après le déplacement des pales 9a, 9b, 9c, ces dernières font toujours face au vent. Les moyens de guidage 45 comprennent par exemple au moins une bielle (non représentée) ayant une extrémité montée en rotation sur l'arbre 44 et une autre extrémité fixée à l'extrémité 11 de pied de pale de l'une des pales de la famille 8. Il est prévu une bielle pour chaque pale. On peut prévoir un disque au lieu d'une bielle. Les moyens de guidage 45 comprennent également des éléments de verrouillage (non représentés) bloquant les pales soit dans la position initiale soit dans la position escamotée. Le microcontrôleur commande le blocage ou le déblocage des moyens de verrouillage via des informations reçues du capteur 50 ou de l'anémomètre 61 ou un ordre à distance d'un opérateur. Les pales 9 agencées les unes derrière les autres permettent l'agrandissement de la zone d'échappement 34 pour évacuer une grande quantité d'air.

La présente éolienne 1 est parfaitement adaptée pour une utilisation terrestre (usage particulier, zones d'habitation, zones commerciales ou encore des zones d'activité) ou une utilisation offshore.

L'invention est décrite dans ce qui précède à titre d'exemple. Il est entendu que l'homme du métier est à même de réaliser différentes variantes de réalisation de l'invention, en associant par exemple les différentes caractéristiques ci-dessus prises seules ou en combinaison, sans pour autant sortir du cadre de l'invention.

## Revendications

1. Eolienne (1) comprenant :
- un rotor (5) tournant autour d'un axe horizontal (15) de rotation sensiblement parallèle à la direction du vent, le rotor (5) présentant une face avant (6) dirigée vers le vent et sensiblement perpendiculaire à la direction du vent, et une face arrière (7) située vers un support du rotor; et,
- au moins deux familles (8) distinctes de pales (9, 9a, 9b, 9c) réparties sur le rotor (5), chaque famille (8) de pales comporte au moins trois pales (9, 9a, 9b, 9c) présentant une extrémité libre (10) et une extrémité de pied de pale (11) liée audit rotor;
**caractérisée en ce que** chaque famille de pales (9, 9a, 9b, 9c) comprend une pale de réception (9a) guidant le vent vers une pale de guidage (9b) laquelle guide le vent vers une pale de force (9c) présentant une surface (13) disposée de manière sensiblement perpendiculaire à la direction du vent, les extrémités de pied de pale (11) des pales (9, 9a, 9b, 9c) de chaque famille (8) de pales (9, 9a, 9b, 9c) étant décalées successivement sur une surface (12) extérieure du rotor (5) selon son axe de rotation (15) et la pale de réception (9a) présente une longueur réduite par rapport à la pale de guidage (9b) qui elle-même présente une longueur réduite par rapport à la pale de force (9c), que chaque extrémité de pied de pale (11) est agencée sur la surface (12) du rotor suivant un angle (α) prédéterminé formé entre l'axe de rotation du rotor et la direction de l'extrémité de pied de pale, que les pales (9, 9a, 9b, 9c) sont dressées sur le rotor (5) suivant une direction longitudinale qui forme un angle (β) prédéterminé avec la surface (12) du rotor (5), que l'angle prédéterminée (α, β) est supérieur à 0 et inférieur ou égale à 90°.

2. Eolienne (1) selon la revendication 1, **caractérisée en ce que** la pale de réception (9a) est disposée devant la pale de force (9c) selon l'axe de rotation (15) du rotor (5).

3. Eolienne (1) selon la revendication 1, **caractérisée en ce que** chaque famille de pales (8) comprend une page de guidage (9b) laquelle guide le vent vers la pale de force (9c).

4. Eolienne (1) selon la revendication 3, la pale de réception (9a) présente une longueur réduite par rapport à la pale de guidage (9b) qui elle-même présente une longueur réduite par rapport à la pale de force (9c)

5. Eolienne (1) selon l'une quelconque des revendications précédentes, **caractérisée en ce qu'**elle comprend des moyens de déplacement (23) déplaçant les familles (8) de pales (9, 9a, 9b, 9c) entre :
- une position initiale dans laquelle les familles (8) de pales sont proches de l'axe de rotation (15) du rotor et déployées ; et,
- une position développée dans laquelle les familles de pales sont situées à distance de l'axe de rotation (15) du rotor.

6. Eolienne (1) selon la revendication précédente, **caractérisée en ce que** les moyens de déplacement (23) font varier l'agencement des familles (8) de pales selon un mouvement :
- radial par rapport à l'axe de rotation (15) du rotor ; et/ou
- de translation sensiblement parallèle à la surface (12) du rotor (5) suivant une direction orientée depuis la face arrière (7) vers la face avant (6) ou inversement.

7. Eolienne (1) selon l'une quelconque des revendications précédentes, **caractérisée en ce que** chaque famille (8) de pales (9) est montée sur un support (24) lié aux moyens de déplacements (23).

8. Eolienne (1) selon l'une quelconque des revendications 1 à 6, **caractérisée en ce que** chaque famille (8) de pales (8) est montée sur un support (24) comprenant une embase (60) coulissant sur des rails (63) de guidages, lesdits rails de guidage étant agencés sur un profilé (22) d'une structure (19) disposée dans le rotor (5), le profilé (22) étant connecté aux moyens de déplacements (23).

9. Eolienne (1) selon la revendication précédente, **caractérisée en ce que** la structure (19) comporte au moins le profilé (22) pourvu d'une première extrémité (35) et d'une deuxième extrémité (36) libre, le profilé (22) étant agencé entre une première (21) plateforme présentant une surface (69) interne et une seconde (22) plateforme à laquelle est articulée la première extrémité (35) de sorte que le profilé (22) est mobile entre une première position de fonctionnement dans laquelle la deuxième extrémité (36) libre est affleurant avec la surface (69) et une position de mise en berne dans laquelle la deuxième extrémité (36) libre est située à distance de la surface (69) via les moyens de déplacements (23).

10. Eolienne (1) selon l'une des revendications 7 à 9, **caractérisée en ce que** dans le support (24) comporte des moyens de mise en rotation du support (24) par rapport à la surface (12) du rotor (5) autour d'un axe (133) de rotation traversant un pied (58) du support (24) et suivant un angle compris entre 0° et 360°.

11. Eolienne (1) selon la revendication 1, **caractérisée** qu'elle comprend des moyens de guidage déplaçant dans chaque famille (8) chaque pale (9, 9a, 9b, 9c) de ladite famille (8) sensiblement suivant une rotation autour de l'axe de rotation (15) du rotor entre :
- la position initiale dans laquelle les pales (9, 9a, 9b, 9c) sont proches de l'axe de rotation (15) et déployées ; et
- une position escamotée dans laquelle les pales (9, 9a, 9b, 9c) sont proche de l'axe de rotation (15) et placées les unes derrière les autres.

12. Eolienne (1) selon l'une quelconque des revendications précédentes, **caractérisée en ce que** le rotor (5) comprend une paroi (33) comportant des ouvertures traversantes (28, 28') s'étendant longitudinalement depuis la face avant (6) vers la face arrière (7) du rotor (5) ou s'étendant suivant une courbe (46) comprenant une première portion (49) s'étendant sensiblement longitudinalement depuis la face avant (6) vers la face arrière (7) et une deuxième portion (49) s'étendant suivant une direction sensiblement parallèle à la direction (17) de l'extrémité de pied de pale (11) de la pale de force (9c).

13. Eolienne (1) selon la revendication précédente, **caractérisée en ce que** chaque ouverture traversante (28, 28') est adaptée à recevoir au moins un élément (27, 29)) lié aux moyens de déplacement (23) ou des moyens de guidage (45) traversant l'ouverture traversante (28, 28') entre la position initiale et la position déployée ou escamotée.

14. Eolienne (1) selon la revendication 12 ou 13, **caractérisée** en ce les moyens de déplacement (23) ou les moyens de guidage (45) comprennent au moins un vérin hydraulique ou une vis sans fin.

15. Eolienne (1) selon l'une quelconque des revendications 1 à 14, **caractérisée en ce que** le rotor (5) présente une section tronconique.

16. Eolienne (1) selon les revendications 1 à 14, **caractérisée en ce que** le rotor (5) présente une section cylindrique.

## Patentansprüche

1. Windkraftanlage (1), umfassend:
- einen Rotor (5), der um eine horizontale Drehachse (15) dreht, die im Wesentlichen zur Richtung des Windes parallel ist, wobei der Rotor (5) eine Vorderseite (6), die dem Wind zugewandt und im Wesentlichen zur Richtung des Windes senkrecht ist, und eine Rückseite (7) aufweist, die zu einer Halterung des Rotors hin liegt; und
- mindestens zwei verschiedene Gruppen (8) von Schaufeln (9, 9a, 9b, 9c), die am Rotor (5) verteilt sind, jede Schaufelgruppe (8) mit mindestens drei Schaufeln (9, 9a, 9b, 9c), die ein freies Ende (10) und ein Schaufelfußende (11) aufweisen, das mit dem Rotor verbunden ist;
**dadurch gekennzeichnet, dass** jede Gruppe von Schaufeln (9, 9a, 9b, 9c) eine Aufnahmeschaufel (9a), umfasst, die den Wind zu einer Leitschaufel (9b) leitet, welche den Wind zu einer Laufschaufel (9c) leitet, die eine Fläche (13) aufweist, welche im Wesentlichen senkrecht zur Richtung des Windes angeordnet ist, wobei die Schaufelfußenden (11) der Schaufeln (9, 9a, 9b, 9c) jeder Gruppe (8) von Schaufeln (9, 9a, 9b, 9c) an einer Außenfläche (12) des Rotors (5) entlang dessen Drehachse (15) hintereinander versetzt sind, und die Aufnahmeschaufel (9a) eine im Verhältnis zur Leitschaufel (9b) verringerte Länge aufweist, welche ihrerseits eine im Verhältnis zur Laufschaufel (9c) verringerte Länge aufweist, dass jedes Schaufelfußende (11) an der Fläche (12) des Rotors in einem vorbestimmten Winkel (α) eingerichtet ist, der zwischen der Drehachse des Rotors und der Richtung des Schaufelfußendes gebildet wird, dass die Schaufeln (9, 9a, 9b, 9c) am Rotor (5) in einer Längsrichtung aufgerichtet sind, die einen vorbestimmten Winkel (β) zur Fläche (12) des Rotors (5) bildet, dass der vorbestimmte Winkel (α, β) größer als 0 und kleiner oder gleich 90 ° ist.

2. Windkraftanlage (1) nach Anspruch 1, **dadurch gekennzeichnet, dass** die Aufnahmeschaufel (9a) entlang der Drehachse (15) des Rotors (5) vor der Laufschaufel (9c) angeordnet ist.

3. Windkraftanlage (1) nach Anspruch 1, **dadurch gekennzeichnet, dass** jede Schaufelgruppe (8) eine Leitschaufel (9b) umfasst, die den Wind zur Laufschaufel (9c) leitet.

4. Windkraftanlage (1) nach Anspruch 3, **dadurch gekennzeichnet, dass** die Aufnahmeschaufel (9a) eine im Verhältnis zur Leitschaufel (9b) verringerte Länge aufweist, welche ihrerseits eine im Verhältnis zur Laufschaufel (9c) verringerte Länge aufweist.

5. Windkraftanlage (1) nach einem der vorstehenden Ansprüche, **dadurch gekennzeichnet, dass** sie Verstellmittel (23) umfasst, die die Gruppen (8) von Schaufeln (9, 9a, 9b, 9c) verstellen zwischen:
- einer Ausgangsstellung, in der sich die Schaufelgruppen (8) nahe an der Drehachse (15) des Rotors befinden und aufgestellt sind; und
- einer entwickelten Stellung, in der die Schaufelgruppen in Abstand von der Drehachse (15) des Rotors liegen.

6. Windkraftanlage (1) nach dem vorstehenden Anspruch, **dadurch gekennzeichnet, dass** die Verstellmittel (23) die Einrichtung der Schaufelgruppen (8) variieren gemäß einer:
- im Verhältnis zur Drehachse (15) des Rotors radialen Bewegung; und/oder
- im Wesentlichen zur Fläche (12) des Rotors (5) parallelen Translationsbewegung in einer Richtung, die von der Rückseite (7) zur Vorderseite (6) oder umgekehrt gerichtet ist.

7. Windkraftanlage (1) nach einem der vorstehenden Ansprüche, **dadurch gekennzeichnet, dass** jede Gruppe (8) von Schaufeln (9) an einer Halterung (24) montiert ist, die mit den Verstellmitteln (23) verbunden ist.

8. Windkraftanlage (1) nach einem der Ansprüche 1 bis 6, **dadurch gekennzeichnet, dass** jede Gruppe (8) von Schaufeln (9,9a,9b,9c) an einer Halterung (24) montiert ist, die einen auf Leitschienen (63) gleitenden Sockel (60) umfasst, wobei die Leitschienen an einem Profil (22) einer Struktur (19) eingerichtet sind, die im Rotor (5) angeordnet ist, wobei das Profil (22) mit den Verstellmitteln (23) verbunden ist.

9. Windkraftanlage (1) nach dem vorstehenden Anspruch, **dadurch gekennzeichnet, dass** die Struktur (19) mindestens das Profil (22) umfasst, das mit einem ersten Ende (35) und einem zweiten, freien Ende (36) versehen ist, wobei das Profil (22) zwischen einer ersten Plattform (21), die eine Innenfläche (69) aufweist, und einer zweiten Plattform (22) eingerichtet ist, an der das erste Ende (35) so angelenkt ist, dass das Profil (22) über die Verstellmittel (23) zwischen einer ersten Betriebsstellung, in der das zweite, freie Ende (36) mit der Fläche (69) bündig ist, und einer ausgeklinkten Stellung beweglich ist, in der das zweite, freie Ende (36) in Abstand von der Fläche (69) liegt.

10. Windkraftanlage (1) nach einem der Ansprüche 7 bis 9, **dadurch gekennzeichnet, dass** die Halterung (24) Mittel zum Drehen der Halterung (24) im Verhältnis zur Fläche (12) des Rotors (5) um eine Drehachse (133), die durch einen Fuß (58) der Halterung (24) hindurchgeht, und in einem Winkel im Bereich zwischen 0° und 360° umfasst.

11. Windkraftanlage (1) nach Anspruch 1, **dadurch gekennzeichnet, dass** sie Leitmittel umfasst, die in jeder Gruppe (8) jede Schaufel (9, 9a, 9b, 9c) der Gruppe (8) im Wesentlichen in einer Drehung um die Drehachse (15) des Rotors verstellen zwischen:
- der Ausgangsstellung, in der sich die Schaufeln (9, 9a, 9b, 9c) nahe an der Drehachse (15) befinden und aufgestellt sind; und
- einer versenkten Stellung, in der sich die Schaufeln (9, 9a, 9b, 9c) nahe an der Drehachse (15) befinden und hintereinander platziert sind.

12. Windkraftanlage (1) nach einem der vorstehenden Ansprüche, **dadurch gekennzeichnet, dass** der Rotor (5) eine Wand (33) umfasst, die Durchgangsöffnungen (28, 28') umfasst, welche sich längs von der Vorderseite (6) zur Rückseite (7) des Rotors (5) erstrecken, oder sich in einer Kurve (46) erstrecken, die einen ersten Abschnitt (49), der sich im Wesentlichen längs von der Vorderseite (6) zur Rückseite (7) erstreckt, und einen zweiten Abschnitt (49) umfasst, der sich in eine Richtung erstreckt, die im Wesentlichen zur Richtung (17) des Schaufelfußendes (11) der Laufschaufel (9c) parallel ist.

13. Windkraftanlage (1) nach dem vorstehenden Anspruch, **dadurch gekennzeichnet, dass** jede Durchgangsöffnung (28, 28') dazu geeignet ist, mindestens ein mit den Verstellmitteln (23) verbundenes Element (27, 29)) oder Leitmittel (45) aufzunehmen, die zwischen der Ausgangsstellung und der aufgestellten oder versenkten Stellung durch die Durchgangsöffnung (28, 28') hindurchgehen.

14. Windkraftanlage (1) nach Anspruch 12 oder 13, **dadurch gekennzeichnet, dass** die Verstellmittel (23) oder die Leitmittel (45) mindestens einen Hydraulikzylinder oder eine Schnecke umfassen.

15. Windkraftanlage (1) nach einem der Ansprüche 1 bis 14, **dadurch gekennzeichnet, dass** der Rotor (5) einen kegelstumpfförmigen Querschnitt aufweist.

16. Windkraftanlage (1) nach den Ansprüchen 1 bis 14, **dadurch gekennzeichnet, dass** der Rotor (5) einen zylinderförmigen Querschnitt aufweist.

## Claims

1. A wind turbine (1) comprising:
a rotor (5) for rotating about a horizontal axis (15) of rotation substantially parallel to the direction of the wind, the rotor (5) having a front face (6) facing into the wind and substantially perpendicular to the direction of the wind, and a rear face (7) situated toward a support of the rotor; and
at least two distinct families (8) of blades (9, 9a, 9b, 9c) distributed over the rotor (5), each family (8) of blades comprises at least three blades (9, 9a, 9b, 9c) having a free end and a blade root end connected to said rotor;
**characterized in that** each family of blades (9, 9a, 9b, 9c) comprising a catching blade (9a) guiding the wind toward a guide blade (9b) which guides the wind toward a force blade (9c) having a surface (13) arranged substantially perpendicular to the direction of the wind, the blade root ends (11) of the blades (9, 9a, 9b, 9c) of each family (8) of blades (9, 9a, 9b, 9c) being successively offset on an exterior surface (12) of the rotor (5) along its axis of rotation (15) and the catching blade (9a) has a length that is reduced in comparison with the guide blade (9b) which itself has a length that is reduced in comparison with the force blade (9c) and each blade root end (11) is arranged on the surface (12) of the rotor at a predetermined angle (α) formed between the axis of rotation of the rotor and the direction of the blade root end, and the blades (9, 9a, 9b, 9c) stand out from the rotor (5) in a longitudinal direction that forms a predetermined angle (β) with the surface (12) of the rotor (5) and the predetermined angle (α, β) is greater than 0 and less than or equal to 90°.

2. The wind turbine (1) as claimed in claim 1, **characterized in that** the catching blade (9a) is positioned in front of the force blade (9c) along the axis of rotation (15) of the rotor (5).

3. The Wind turbine (1) according to claim 1, **characterized in that** each family of blades (8) comprises a guide blade (9b) which guides the wind towards the force blade (9c).

4. Wind turbine (1) according to claim 3, the catching blade (9a) has a reduced length compared to the guide blade (9b) which itself has a reduced length compared to the force blade (9c)

5. The wind turbine (1) as claimed in any one of the preceding claims, **characterized in that** it comprises movement means (23) moving the families (8) of blades (9, 9a, 9b, 9c) between:
- an initial position in which the families (8) of blades are close to the axis of rotation (15) of the rotor and deployed; and
- a developed position in which the families of blades are situated some distance from the axis of rotation (15) of the rotor.

6. The wind turbine (1) as claimed in claim 6, **characterized in that** the movement means (23) vary the arrangement of the families (8) of blades in a movement that is :
- radial with respect to the axis of rotation (15) of the rotor; and/or
- translational, substantially parallel to the surface (12) of the rotor (5) in a direction oriented from the rear face (7) toward the front face (6) or vice versa.

7. The wind turbine (1) as claimed in any one of the preceding claims, **characterized in that** each family (8) of blades (9) is mounted on a support (24) connected to the movement means (23).

8. The wind turbine (1) as claimed in any one of claims 1 to 6, **characterized in that** each family (8) of blades (8) is mounted on a support (24) comprising a base (60) sliding along guide rails (63), said guide rails being arranged on a profiled section (22) of a structure (19) positioned in the rotor (5), the profiled section (22) being connected to the movement means (23).

9. The wind turbine (1) as claimed in claim 9, **characterized in that** the structure (19) comprises at least the profiled section (22) provided with a first end (35) and with a free second end (36), the profiled section (22) being arranged between a first platform (21) having an internal surface (69) and a second platform (22) to which the first end (35) is articulated so that the profiled section (22) is able to move between an operational first position in which the free second end (36) lies flush with the surface (69) and a feathered position in which the free second end (36) is situated some distance from the surface (69) via the movement means (23).

10. The wind turbine (1) as claimed in one of claims 8 to 10, **characterized in that** in the support (24) comprises means of setting the support (24) in rotation with respect to the surface (12) of the rotor (5) about an axis (133) of rotation passing through a root (58) of the support (24) at an angle of between 0° and 360°.

11. The wind turbine (1) as claimed in one of claims 1 to 5, **characterized in that** it comprises guide means which, within each family (8), move each blade (9, 9a, 9b, 9c) of said family (8) substantially in a rotation about the axis of rotation (15) of the rotor between:
- the initial position in which the blades (9, 9a, 9b, 9c) are close to the axis of rotation (15) and deployed; and
- a retracted position in which the blades (9, 9a, 9b, 9c) are close to the axis of rotation (15) placed behind one another.

12. The wind turbine (1) as claimed in any one of the preceding claims, **characterized in that** the rotor (5) comprises a wall (33) comprising through-openings (28, 28') extending longitudinally from the front face (6) toward the rear face (7) of the rotor (5) or extending in a curve (46) comprising a first portion (49) extending substantially longitudinally from the front face (6) toward the rear face (7) and a second portion (49) extending in a direction substantially parallel to the direction (17) of the blade root end (11) of the force blade (9c).

13. The wind turbine (1) as claimed in claim 13, **characterized in that** each through-opening (28, 28') is designed to receive at least one element (27, 29) connected to the movement means (23) or guide means (45) passing through the through-opening (28, 28') between the initial position and the deployed or retracted position.

14. The wind turbine (1) as claimed in claim 13 or 14, **characterized in that** the movement means (23) or the guide means (45) comprise at least one hydraulic actuator or a worm.

15. The wind turbine (1) as claimed in any one of claims 1 to 15, **characterized in that** the rotor (5) has a frustoconical section.

16. The wind turbine (1) as claimed in claims 1 to 15, **characterized in that** the rotor (5) has a cylindrical section.
